# EUROPÄISCHE PATENTSCHRIFT

(11) **EP 2 128 015 B1**
(45) Veröffentlichungstag und Bekanntmachung des Hinweises auf die Patenterteilung: **13.02.2013**
(21) Anmeldenummer: 09006198.7
(22) Anmeldetag: 07.05.2009
(51) Int. Cl.: B63G 8/08, B63H 19/00, F41F 3/08, F42B 19/01, H01L 41/00

(54) **Unterseeboot mit piezoelektrischem Aktuator in der Antriebsvorrichtung**
Submarine with piezo electric actuator in the propulsion system
Submersible avec actuateur piözo ölöctrique dans la systéme de propulsion

(30) Priorität: 29.05.2008 DE 102008025812
(43) Veröffentlichungstag der Anmeldung: 02.12.2009
(73) Patentinhaber: Howaldtswerke-Deutsche Werft GmbH, 24143 Kiel (DE)
(72) Erfinder: Teppner, Randolf, Dr., 25563 Wrist (DE)
(74) Vertreter: Vollmann, Heiko

(56) Entgegenhaltungen:
- US-A- 3 154 043
- US-A- 4 110 630
- US-A- 4 429 652
- US-A1- 2003 167 998
- US-A1- 2006 172 629
- US-A1- 2006 173 589

## Beschreibung

Die Erfindung betrifft ein Unterseeboot mit den im Oberbegriff des Anspruchs 1 angegebenen Merkmalen.

In Unterseebooten wird inner- und außerhalb des Druckkörpers eine Vielzahl elektrisch oder hydraulisch betriebener Antriebsvorrichtungen eingesetzt. Hierzu zählen neben dem Propellermotor beispielsweise Vorrichtungen zur Ruderstellung sowie Vorrichtungen zum Ausfahren diverser Gegenstände aus dem Bootskörper. Aus Sicherheitsgründen müssen solche Antriebsvorrichtungen oftmals zweifach bereitgestellt werden, um bei Ausfall eines Antriebs einen Ersatzantrieb zur Verfügung zu haben. Dies ist üblicherweise mit einem großen Platzbedarf verbunden, was angesichts des begrenzten Raumangebots insbesondere kleinerer Unterseeboote nachteilig ist, zumal elektrischen Antrieben die große Kräfte bzw. Momente übertragen sollen, in der Regel auch noch Getriebe nachzuschalten sind. In militärischen Unterseebooten erweist es sich darüber hinaus als ungünstig, dass mechanische Getriebe Geräusche erzeugen können, die neben der an sich schon problematischen elektromagnetischen Signatur der Elektromotoren zusätzlich eine akustische Signatur darstellen. Von hydraulischen Antrieben erzeugte Signaturen sind in der Regel vernachlässigbar, allerdings besteht bei hydraulischen Systemen grundsätzlich die Gefahr von Undichtigkeiten, was zu einer Leckage von Hydrauliköl und bei Einsatz außerhalb des Druckkörpers auch zu einem Eindringen von Seewasser führen kann.

Des Weiteren ist es bekannt, bei in einer Flüssigkeit oder unter Wasser eingesetzten Vorrichtungen und Fahrzeugen piezoelektrische Antriebe zu verwenden. So gehen aus US 2006/ 172629 A1, US 2006/173589 A1 und US 3,154,043 A Vorrichtungen und Fahrzeuge hervor, die an einer mit einer Flüssigkeit bzw. Wasser in Kontakt befindlichen Außenseite Antriebsanordnungen aufweisen. Bei diesen Antriebsanordnungen bilden eine Vielzahl nebeneinander angeordneter piezoelektrische Aktuatoren mit darin befestigen stabförmigen Elementen ein Antriebsfeld, das durch entsprechende Ansteuerung der Aktuatoren eine Wellenbewegung ausführen kann.

In US 4,429,652 ist ein Torpedo beschrieben, bei dem Außenwandbereiche, die mit Piezokristallen gekoppelt sind, durch entsprechende Ansteuerung in Schwingung versetzt werden, um den Wasserwiderstand des Torpedos zu verringern.

Vor diesem Hintergrund liegt der Erfindung die Aufgabe zugrunde, ein Unterseeboot mit verbesserten Antriebsvorrichtungen zu schaffen, die die Nachteile der bislang verwendeten Antriebsvorrichtungen nicht aufweisen.

Diese Aufgabe wird durch das Unterseeboot mit den in Anspruch 1 angegebenen Merkmalen gelöst, wobei sich vorteilhafte Weiterbildungen dieses Unterseeboots aus den Unteransprüchen, der nachfolgenden Beschreibung sowie der Zeichnung ergeben.

Das erfindungsgemäße Unterseeboot, bei dem es sich insbesondere um ein militärisches Unterseeboot handelt, verfügt über einen Druckkörper und zumindest eine Antriebsvorrichtung zum Bewegen eines Bauteils, wobei im Sinne der Erfindung unter einem Bauteil nicht nur ein Einzelteil sondern auch eine Baugruppe z. B. in Form eines Geräts oder einer Vorrichtung zu verstehen ist.

Gemäß der Erfindung ist die Antriebsvorrichtung mit zumindest einem piezoelektrischen Aktor ausgestattet. Hierbei handelt es sich um einen Aktor, der ein Bauelement aus einem piezoelektrischen Material aufweist, das seine Form und damit die Form des Aktors aufgrund des inversen piezoelektrischen Effekts ändert. Dieser Aktor ist so mit dem zu bewegenden Bauteil bewegungsgekoppelt, dass das Bauteil durch die Formänderung des Aktors bewegt wird. In der Regel wird die Antriebseinrichtung mehr als einen piezoelektrischen Aktor aufweisen, wobei die Anzahl der benötigten Aktoren letztendlich von der zum Bewegen des Bauteils aufzubringenden Kraft, bzw. von dem hierzu erforderlichem Moment abhängig ist.

Die Verwendung einer oder mehrerer Antriebsvorrichtungen mit mindestens einem piezoelektrischen Aktor in einem Unterseeboot ist mit vielen Vorteilen verbunden. Der Einsatz eines oder mehrerer dieser Aktoren zum Antrieb eines Bauteils ermöglicht im Wesentlichen beliebig lange Bewegungswege des Bauteils bei einer im Mikrometerbereich liegenden Positioniergenauigkeit. Bezogen auf die von ihr erzeugten Vorschubkräfte und Vorschubgeschwindigkeiten kann die piezoelektrische Aktoren nutzende Antriebsvorrichtung im Vergleich zu den bislang eingesetzten elektrischen und hydraulischen Antriebsvorrichtungen eine deutlich kompaktere Baugröße aufweisen.

Ein weiterer Vorteil einer solchen Antriebsvorrichtung ist darin zu sehen, dass die piezoelektrischen Aktoren nahezu wartungs- und verschleißfrei sind, da ihr Wirkprinzip auf einer kristallinen Formänderung und nicht auf bewegten Teilen beruht. Sollte es dennoch zu einem Ausfall eines piezoelektrischen Aktors kommen, ist dies zumindest bei solchen Antriebsvorrichtungen unproblematisch, die mit einer Vielzahl dieser Aktoren ausgestattet sind. Hier kann der Ausfall einzelner Aktoren zwar zu einer Leistungsverschlechterung, nicht aber zu einem vollständigen Antriebsausfall führen.

Die elektromagnetische Signatur von Antriebsvorrichtungen mit piezoelektrischen Aktoren ist im Vergleich zu den bislang üblichen elektrischen Antriebsvorrichtungen vernachlässigbar oder bestenfalls gar nicht vorhanden. Gleiches gilt für die akustische Signatur solcher Antriebsvorrichtungen, da piezoelektrische Aktoren typischerweise Ultraschallwellen mit einer sehr geringen Ausbreitungsreichweite erzeugen und daher bereits in geringer Entfernung von dem Unterseeboot nicht mehr wahrnehmbar sind.

Der piezoelektrische Aktor ist derart an dem zu bewegenden Bauteil angeordnet, dass er mit diesem in und außer Kontakt bringbar ist. In diesem Zusammenhang ist vorzugsweise vorgesehen, dass der Kontakt zwischen dem Aktor und dem Bauteil direkt durch eine Formänderung des Aktors herstellbar ist. Der Aktor so angeordnet und ausgebildet, dass die Kontaktierung des Bauteils im Wesentlichen in einer Richtung normal zur Bewegungsrichtung des Bauteils erfolgt und zu einem Kraftschluss zwischen dem Aktor und dem Bauteil führt. Zu diesem Zweck kann z.B. ein Reibbelag eine das Bauteil kontaktierende Fläche des Aktors bilden. Um das Bauteil bewegen zu können, ist der Aktor typischerweise auch in der Bewegungsrichtung des Bauteils formänderbar. So kann der Aktor zunächst durch eine erste Formänderung mit dem Bauteil in Kontakt gebracht werden und das Bauteil dann durch eine weitere in Bewegungsrichtung des Bauteils gerichtete Formänderung bewegen. Hierbei lassen sich im Wesentlichen beliebige Bewegungswege des Bauteils realisieren, indem der Aktor mehrmals nacheinander mit dem Bauteil in und außer Kontakt gebracht wird, wobei der Aktor das Bauteil in den Kontaktphasen in verhältnismäßig kleinen, sehr schnell aufeinander folgenden Schubschritten bewegt.

Der Aktor weist zumindest zwei in einer Richtung normal zur Bewegungsrichtung des Bauteils miteinander gekoppelte Piezoelemente auf, von denen ein erstes Piezoelement in der Richtung normal zur Bewegungsrichtung des Bauteils formänderbar ist und ein zweites Piezoelement in einer Ebene normal zur Verformungsrichtung des ersten Piezoelementes formänderbar ist. Hierbei dient das erste Piezoelement dazu, einen Kontakt des Aktors mit dem zu bewegenden Bauteil herzustellen bzw. dazu, einen solchen Kontakt zu lösen, während das zweite Piezoelement das Bauteil bei Kontakt mit dem Aktor in Folge seiner Verformung in der Ebene normal zur Verformungsrichtung des ersten Piezoelements bewegt.

Die Antriebsvorrichtung des erfindungsgemäßen Unterseeboots kann vorteilhaft zur Erzeugung einer Linearbewegung ausgebildet sein, kann also zur Erzeugung einer geradlinigen Bewegung eines Bauteils entlang einer Bewegungsachse dienen. In diesem Fall kann die Antriebsvorrichtung mindestens einen piezoelektrischen Aktor aufweisen, der seine Form in Richtung der Bewegungsachse des Bauteils ändert und dem Bauteil so einen Schub in Richtung dieser Bewegungsachse verleiht.

Sind größere Kräfte zum Bewegen des Bauteils erforderlich, können mehrere dieser Aktoren in Bewegungsrichtung des Bauteils aufeinander folgend und/oder nebeneinander angeordnet sein.

Des Weiteren ist es gemäß einer Weiterbildung der Erfindung vorgesehen, die Antriebsvorrichtung so auszubilden, dass sie Linearbewegungen in mehreren Richtungen ermöglicht. Beispielsweise kann die Antriebsvorrichtung mehrere Aktoren aufweisen, die in unterschiedlichen Richtungen formveränderbar sind. Je nach gewünschter Bewegungsrichtung des Bauteils kann dann jeweils nur der bzw. die Aktoren angesteuert werden, die in der gewünschten Bewegungsrichtung des Bauteils formänderbar sind. Darüber hinaus ist es auch möglich, dass der bzw. die Aktoren jeweils mehrere Piezoelemente aufweisen, die in unterschiedlicher Richtung formänderbar sind, so dass die einzelnen Aktoren Formänderungen in mehreren Richtungen ausführen können. Derart ausgestaltet kann die Antriebsvorrichtung im Wesentlichen alle bislang in Unterseebooten üblichen Linearantriebe ersetzen.

Des Weiteren kann die Antriebsvorrichtung vorteilhaft auch zur Erzeugung einer Drehbewegung eines Bauteils ausgebildet sein. Hierzu kann sie zumindest einen Aktor aufweisen, der mit dem zu bewegenden Bauteil an einem rotationssymmetrischen Umfang in und außer Kontakt bringbar ist, wobei der Aktor seine Form in einer Richtung tangential zum Umfang des zu drehenden Bauteils ändern kann und so das Bauteil dreht. Sind große Drehmomente zur Erzeugung der Drehbewegung des Bauteils erforderlich, kann die Antriebsvorrichtung zweckmäßigerweise mehrere dieser piezoelektrische Aktoren aufweisen, die vorzugsweise um den Umfang des zu bewegenden Bauteils verteilt angeordnet sein können.

In einer weiteren vorteilhaften Weiterbildung kann die Antriebsvorrichtung auch sowohl zur Erzeugung einer Linearbewegung als auch zur Erzeugung einer Drehbewegung ausgebildet sein. So kann die Antriebsvorrichtung mit mindestens einem Aktor ausgestattet sein, der drei Piezoelemente aufweist, wobei die Piezoelemente in zueinander orthogonalen Richtungen formänderbar sind. Ein solcher Aktor kann derart an einem rotationssymmetrischen Umfang des Bauteil angeordnet sein, dass eines dieser Piezoelemente den Kontakt herstellt oder löst und ein anderes dieser Piezoelemente durch Spannungsbeaufschlagung seine Form tangential zum Umfang des Bauteils ändert und das Bauteil auf diese Weise dreht, während durch Spannungsbeaufschlagung des dritten Piezoelements eine Formänderung in Richtung der Rotationsachse des Bauteils erzeugt wird, die das Bauteil in eine Linearbewegung in Richtung der Rotationsachse versetzt. Daneben ist es auch möglich, die Antriebsvorrichtung mit mindestens zwei Aktoren auszurüsten, die neben dem Herstellen und Lösen des Kontaktes ihre Form lediglich in jeweils eine Richtung ändern, wobei die Formänderungsrichtung eines ersten Aktors tangential zum Umfang des Bauteils verläuft und die Formänderungsrichtung des zweiten Aktors mit der Ausrichtung der Rotationsachse des Bauteils übereinstimmt. Bei dieser Ausgestaltung kann das Bauteil durch Ansteuerung eines der beiden Aktoren entweder in eine Dreh- oder in eine Linearbewegung versetzt werden.

Besonders vorteilhaft ist die Antriebsvorrichtung aus einer Kombination von X-Z-Aktoren und Y-Z-Aktoren oder aus X-Y-Z-Aktoren aufgebaut. Hierbei bezeichnen "X", "Y" und "Z" die zueinander orthogonalen Wirkrichtungen der jeweiligen Aktoren.

Bevorzugt ist die Antriebsvorrichtung auch für eine Anordnung außerhalb des Druckkörpers des Unterseeboots vorgesehen. Beispielsweise kann die Antriebsvorrichtung in einem mit Wasser gefluteten Bereich zwischen dem Druckkörper und einer den Druckkörper außenseitig umgebenden Außenhaut angeordnet sein. Dies ist insofern unproblematisch, als piezoelektrische Aktoren in geeigneter Bauform, z. B. eingegossen in einem Elastomer, eine große Seewasser- und Druckbeständigkeit besitzen.

Bevorzugt bildet die Antriebsvorrichtung Teil einer Ausfahreinrichtung für Ausfahrgeräte. In diesem Zusammenhang beinhaltet der Begriff "Ausfahrgeräte" alle Geräte und Einrichtungen, die an dem Unterseeboot von der Außenseite des Druckkörpers weg nach außen bewegt werden, oder von dem Unterseeboot aus dem Druckkörper oder einem Bereich zwischen dem Druckkörper und einer den Druckkörper außenseitig umhüllenden Außenhaut ausgelassen werden. Die Ausfahreinrichtungen und dementsprechend die diese antreibende Antriebsvorrichtung können außerhalb des Druckkörpers des Unterseeboots z. B. in dessen Turm oder dem Bereich zwischen dem Druckkörper und der darüber angeordneten Außenhaut angeordnet sein. Bei Ausfahrgeräten, die durch die Wandung des Druckkörpers hindurchgeführt aus dem Druckkörper ausgefahren werden, kann es auch zweckmäßig sein, die Antriebsvorrichtung ggf. in dem Druckkörper anzuordnen. Je nach Art der Ausfahreinrichtung kann die Antriebsvorrichtung zur Erzeugung einer Linear- und/oder einer Drehbewegung ausgebildet sein.

Vorteilhaft kann die Antriebsvorrichtung auch einen Propellermotor, d. h. den Fahrmotor des erfindungsgemäßen Unterseeboots bilden. Bei dieser Ausgestaltung des Propellermotors kann eine Vielzahl piezoelektrischer Aktoren der Umfangsfläche einer Antriebswelle des Propellers gegenüberliegend angeordnet sein, die bei Kontakt mit der Antriebswelle diese und damit einhergehend den Propeller in eine Drehbewegung versetzen.

Weiter vorteilhaft kann die Antriebsvorrichtung auch einen Teil einer Ruderanlage bilden. Vorgesehen ist also eine Ausgestaltung des erfindungsgemäßen Unterseeboots, bei der eine Antriebsvorrichtung mit zweckmäßigerweise mehreren piezoelektrischen Aktoren zum Stellen der Ruderblätter einer Seiten- und/oder Tiefenruderanlage des Unterseeboots vorgesehen ist. Dies ist insofern vorteilhaft, als eine solche Ruderanlage vollständig, d. h. einschließlich der Antriebsvorrichtung, außerhalb des Druckkörpers des Unterseebootes angeordnet sein kann, sodass keine Getriebemittel von einem ansonsten innerhalb des Druckkörpers angeordneten Antrieb durch die Wandung des Druckkörpers zu den Ruderblättern geführt werden müssen.

Die Erfindung verfolgt in einer weiteren Ausgestaltung auch die Idee, z. B. an dem Druckkörper oder an der den Druckkörper umgebenden Außenhaut ausgebildete schwenkbare Türen und Klappen mit einer Antriebsvorrichtung mit mindestens einem piezoelektrischen Aktor zu öffnen und zu verschließen. Für diesen Zweck ist vorteilhafterweise vorgesehen, dass die Antriebsvorrichtung Teil einer Schließ- und Öffnungseinrichtung für Türen oder Klappen bildet. So kann die Antriebsvorrichtung beispielsweise als ein Drehantrieb bzw. zur Erzeugung einer Drehbewegung ausgebildet sein, die an der Schwenkachse der betreffenden Tür oder Klappe ein Drehmoment erzeugt. Daneben kann die Antriebsvorrichtung selbstverständlich auch als ein Linearantrieb ausgebildet sein, der so mit der Tür bzw. Klappe bewegungsgekoppelt ist, dass er zum Öffnen oder Schließen ein entsprechendes Drehmoment um die Schwenkachse dieser Tür oder Klappe erzeugt.

Weitere vorteilhafte Ausgestaltungen des erfindungsgemäßen Unterseeboots sehen vor, dass die Antriebseinrichtung Teil einer Ausstoßvorrichtung, insbesondere einer Torpedoausstoßvorrichtung bildet, also dazu eingesetzt wird, auszubringende Gegenstände durch Schleusen, wie z. B. Torpedos durch Torpedorohre zu transportieren und auszustoßen, oder dass die Antriebsvorrichtung Teil einer Transportvorrichtung und insbesondere Teil einer Torpedotransport- und -stauvorrichtung bildet, mittels derer beispielsweise Torpedos in die Torpedoausstoßvorrichtung eingezogen werden.

Schließlich sieht eine weitere zweckmäßige Weiterbildung der Erfindung vor, die piezoelektrischen Aktoren elastisch zu lagern. Dies ist insbesondere dann vorteilhaft, wenn sich der Querschnitt bzw. die Querschnittskontur des mittels der Antriebsvorrichtung zu bewegenden Bauteils über seinen Bewegungsweg ändert. Aufgrund ihrer elastischen Lagerung kann sich die Position der Aktoren an diese Querschnitts- oder Querschnittskonturänderung anpassen.

Bevorzugt fixieren die Aktoren der Antriebsvorrichtung die zu bewegenden Bauteile im spannungslosen Zustand. Dies ist z. B. bei Verwendung der Antriebsvorrichtung als Antrieb zum Ausfahren von Ausfahrgeräten in einer Ausfahreinrichtung vorteilhaft, da die Ausfahrgeräte sicher in ihrer Ausfahrstellung gehalten werden, ohne dass an den Aktoren der Antriebsvorrichtung eine Spannung anliegen muss.

Nachfolgend ist die Erfindung anhand von in der Zeichnung dargestellten Ausführungsbeispielen näher erläutert. In der Zeichnung zeigen:
- Fig.1: in vereinfachter schematischer Darstellung einen piezoelektrischen Aktor in drei möglichen Aktorstellungen,
- Fig. 2: eine vereinfachte Funktionsskizze einer Antriebsvorrichtung mit piezoelektrischen Aktoren,
- Fig. 3: eine Ausfahreinrichtung für ein Ausfahrgerät in vereinfachter schematischer Darstellung,
- Fig.4: eine Einzelheit A aus Fig. 3 in vergrößerter Darstellung,
- Fig. 5: eine Schnittansicht entlang der Schnittlinie IV - IV in Fig. 4 und
- Fig. 6: in vereinfachter schematischer Darstellung ein von einem Ultraschall-Piezomotor angetriebenes Bauteil.

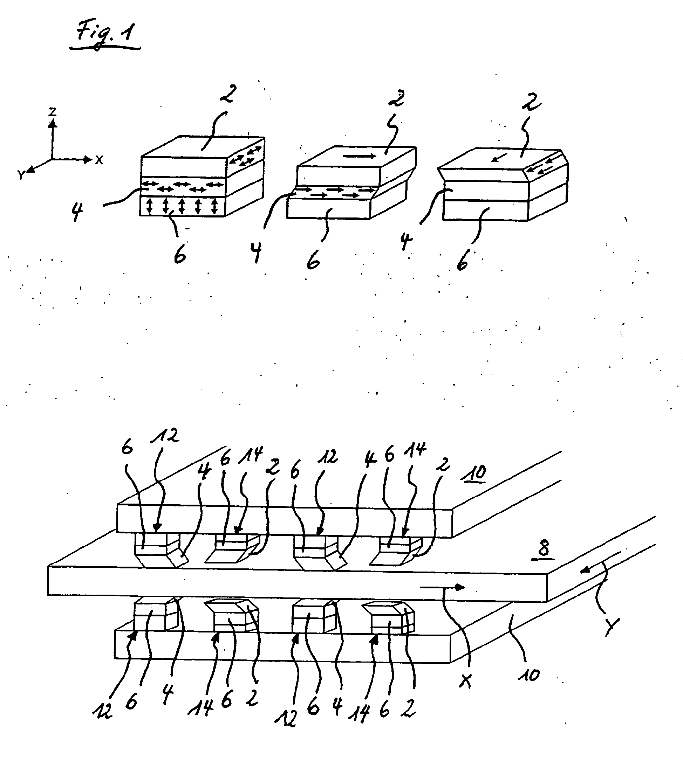

Fig. 1 zeigt stark vereinfacht einen piezoelektrischen Aktor, wie er in einer Antriebsvorrichtung des erfindungsgemäßen Unterseeboots zum Einsatz kommt. Dieser Aktor weist drei Piezoelemente 2, 4 und 6 auf, die stapelartig übereinander angeordnet und fest miteinander verbunden sind. Die Piezoelemente 2, 4, 6 bestehen aus einem piezoelektrischen Material wie z.B. einer piezoelektrischen Keramik. Aufgrund des inversen piezoelektrischen Effekts verändern die Piezoelemente 2, 4 und 6 unter Einwirkung eines elektrischen Feldes ihre Form. Hierzu sind an den einzelnen Piezoelementen 2, 4 und 6 jeweils ein nicht dargestelltes Elektrodenpaar angeschlossen.

Die Polarisation, d.h. die elektrische Orientierung der einzelnen Kristalle des Keramikmaterials der Piezoelementen 2, 4 und 6 ist unterschiedlich. Aus diesem Grund ist die Formänderung der Piezoelementen 2, 4 und 6 bei der Erzeugung eines elektrischen Feldes unterschiedlich. So sind die Piezoelemente 2 und 4 derart ausgebildet, dass sie ihre Gestalt bei Anliegen einer elektrischen Spannung in Form einer Scherung ändern, wobei die Scherung des Piezoelements 2 in eine Richtung Y und die Scherung des Piezoelements 4 in eine zur Richtung Y senkrechte Richtung X erfolgt. Das Piezoelement 6 hingegen ist so ausgebildet, dass es seine Abmessung in einer Richtung Z normal zu den Richtungen X und Y ändert.

Ein solcher Aktor wird im Folgenden als X-Y-Z-Aktor bezeichnet. Aktoren mit nur zwei Piezoelementen, von denen eines lediglich zum Schließen und Lösen des Kontakts dient, werden entsprechend als X-Z- bzw. Y-Z-Aktoren bezeichnet.

In Fig. 2 ist eine Antriebsvorrichtung dargestellt, mit der ein plattenförmiges Bauteil 8 sowohl in eine Richtung X und Gegenrichtung als auch in eine Richtung Y und Gegenrichtung bewegbar ist. Die Antriebsvorrichtung weist zwei Platten 10 auf, die an den voneinander abgewandten Flachseiten des Bauteils 8 beabstandet von diesen beiden Flachseiten angeordnet sind und den feststehenden Teil der Antriebsvorrichtung bilden. An der dem Bauteil 8 zugewandten Seite der Platten 10 sind beispielhaft jeweils vier piezoelektrische X-Y-Z-Aktoren 12 und 14 angeordnet, wobei in Richtung Y nebeneinander jeweils abwechselnd ein Aktor 14 einem Aktor 12 folgt.

Jeder der X-Y-Z-Aktoren 12 und 14 weist an seiner von dem Bauteil 8 abgewandten Seite ein Piezoelement 6 auf, das bei anliegender Spannung derart seine Form ändert, dass es sich in Richtung senkrecht zum Bauteil 8 ausdehnt.

Soll das Bauteil 8 mit der in Fig. 2 dargestellten Antriebsvorrichtung in Richtung Y oder in Gegenrichtung hierzu bewegt werden, werden zunächst die Piezoelemente 6 der Aktoren 12 spannungsbeaufschlagt, woraufhin sich die Piezoelemente 6 soweit in Richtung des Bauteils 8 ausdehnen, dass die Aktoren 12 das Bauteil 8 an beiden Flachseiten kraftschlüssig kontaktieren. Gleichzeitig liegt an den Piezoelementen 6 der Aktoren 14 keine Spannung an, so dass sie das Bauteil 8 nicht kontaktieren. Die Piezoelemente 2 der Aktoren 12 werden nun derart mit Spannung beaufschlagt, dass diese eine Scherbewegung in Richtung Y ausführen und das Bauteil 8 um den Betrag der Scherung der Piezoelemente 2 bewegen und festhalten. Zeitgleich werden die Piezoelemente 2 der nicht kontaktierenden Aktoren 14 derart angesteuert, dass sie eine Scherbewegung in Richtung Y ausführen. Anschließend werden die Aktoren 14 durch entsprechende Ansteuerung der Piezoelemente 6 mit dem Bauteil 8 in Kontakt gebracht, woraufhin die Aktoren 12 durch entsprechende Ansteuerung der Piezoelemente 6 von dem Bauteil 8 gelöst bzw. abgehoben werden und der ganze Vorgang mit vertauschten Rollen der Aktoren 12 und 14 von vorn startet. Entsprechend dem gewünschten Bewegungsweg des Bauteils 8 wird dann dieser Vorgang entsprechend oft wiederholt.

Soll das Bauteil 8 in Richtung X oder in eine Gegenrichtung hierzu bewegt werden, bleiben die Piezoelemente 2 der Aktoren 12 und 14 unbestromt. Die Bewegung des Bauteils 8 erfolgt durch eine Spannungsbeaufschlagung der Piezoelemente 6 und 4 der Aktoren 12 und 14, wobei die Vorgehensweise der oben beschriebenen entspricht. Die Scherung der Piezoelemente 4 in Richtung X erzeugt eine Bewegung des Bauteils 8 in Richtung X.

Die Bewegung des Bauteils 8 in eine Gegenrichtung zur Richtung X oder zur Richtung Y kann erfolgen, indem die Piezoelemente 4 bzw. die Piezoelemente 2 der Aktoren 12 und 14 das Bauteil 8 im ausgescherten Zustand kontaktieren, wobei die Scherung der Piezoelemente 4 bzw. 2 während des Kontaktierens des Bauteils 8 rückgängig gemacht wird.

Damit das Bauteil 8 zwischen den einzelnen Bewegungsschritte nicht ungewollt seine Position ändern kann, werden die Aktoren 12 typischerweise erst dann abgehoben, wenn die Aktoren 14 Kontakt zum Bauteil 8 hergestellt haben und umgekehrt. Bei großer Trägheit des Bauteils 8 kann allerdings die Überschneidung der Kontaktzeiten der Aktoren gegen Null oder sogar darüber hinaus verringert werden.

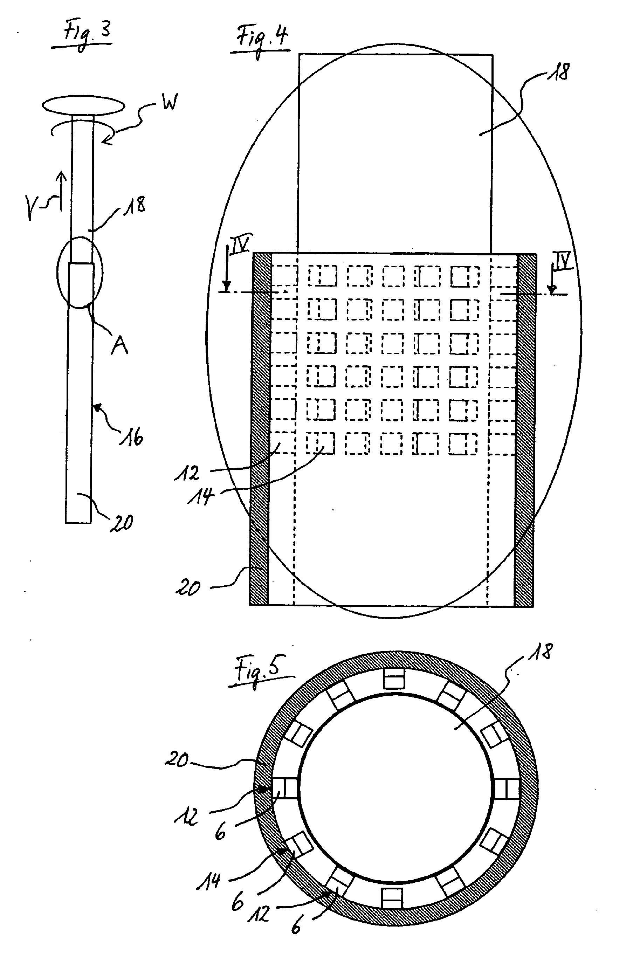

Die Fig. 3 bis 5 zeigen eine Ausfahreinrichtung 16 für ein im Wesentlichen stab- oder rohrförmiges Ausfahrgerät 18, beispielsweise einen Schnorchel, eine Antenne oder dergleichen, wie sie z.B. im Turm eines Unterseeboots untergebracht sind. Die Ausfahreinrichtung 16 weist ein Aufnahmerohr 20 auf, in dem das Ausfahrgerät 18 in eine Richtung V oder entgegen der Richtung V linear verschiebbar und in eine Richtung W oder in Gegenrichtung hierzu drehbar gelagert ist (Fig. 3).

An dem Innenumfang des Aufnahmerohrs 20 der Ausfahreinrichtung 16 sind in Längsrichtung des Aufnahmerohres 20 bzw. in Richtung V in mehreren Reihen, die sich über den gesamten Innenumfang des Aufnahmerohres 20 erstrecken, Aktoren 12 und 14 angeordnet. Hierbei folgt in Umfangsrichtung jeweils ein Aktor 14 einem Aktor 12 (Fig. 5). Die Aktoren 12 und 14 entsprechen den Aktoren 12 und 14, die bei der in Fig. 2 dargestellten Antriebsvorrichtung Verwendung finden. Dementsprechend weisen alle Aktoren 12 und 14 ein Piezoelement 6 auf, das sich bei Anliegen einer Spannung in Richtung des Ausfahrgeräts 18 ausdehnen kann. Die Piezoelemente 4 der Aktoren 12 und 14 sind derart angeordnet, dass sie bei Bestromung eine Scherung in Richtung V vornehmen also dazu dienen, das Ausfahrgerät 18 linear in Richtung V aus dem Aufnahmerohr 20 der Ausfahreinrichtung 16 auszufahren, während die Piezoelemente 2 der Aktoren 12 und 14 bei Spannungsbeaufschlagung in eine Richtung tangential zum Umfang des Ausfahrgeräts 18 scheren und so dem Ausfahrgerät 18 in eine Drehbewegung in Richtung W versetzen können. Die Vorgehensweise zum Bewegen des Ausfahrgeräts 18 korrespondiert mit der Vorgehensweise beim Bewegen des Bauteils 8 mittels der Antriebsvorrichtung aus Fig. 2.

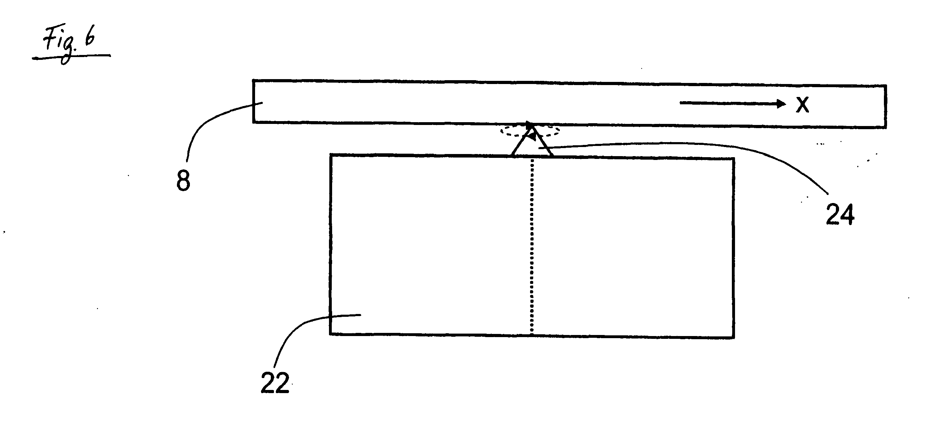

In Fig. 6 wird das Bauteil 8 von einer Antriebsvorrichtung in Form eines Ultraschall-Piezomotors bewegt. Der Ultraschall-Piezomotor weist mindestens ein Piezoelement 22 auf, an dem an einer dem Bauteil 8 zugewandten Seite eine in Richtung des Bauteils 8 spitz zulaufende Nase 24 ausgebildet ist. Durch entsprechende elektrische Ansteuerung wird das Piezoelement 22 in eine Resonanzschwingung versetzt, die die Spitze der mechanisch fest mit dem Piezoelement 22 verbundenen Nase 24 derart auslenkt, dass sie sich in einer elliptischen Bahn bewegt. Die Position des Piezoelements 22 relativ zu dem Bauteil 8 ist so gewählt, dass die Spitze der Nase 24 nur auf einen Teil ihrer elliptischen Bahn in Kontakt mit dem Bauteil 8 ist, das durch diesen Kontakt bewegt wird.

### Bezugszeichenliste

- 2: Piezoelement
- 4: Piezoelement
- 6: Piezoelement
- 8: Bauteil
- 10: Platte
- 12: Aktor
- 14: Aktor
- 16: Ausfahreinrichtung
- 18: Ausfahrgerät
- 20: Aufnahmerohr
- 22: Piezoelement
- 24: Nase

- A: Einzelheit
- V: Richtung
- W: Richtung
- X: Richtung
- Y: Richtung
- Z: Richtung

## Patentansprüche

1. Unterseeboot mit einem Druckkörper und zumindest einer Antriebsvorrichtung zum Bewegen eines Bauteils (8), welche mindestens einen piezoelektrischen Aktor (12, 14) aufweist, **dadurch gekennzeichnet, dass** der piezoelektrische Aktor (12, 14) derart an dem zu bewegenden Bauteil (8) angeordnet ist, dass er mit diesem in und außer Kontakt bringbar ist, und
dass der Aktor (12, 14) zumindest zwei in einer Richtung normal zur Bewegungsrichtung des Bauteils miteinander gekoppelte Piezoelemente (2, 4, 6) aufweist, wobei ein erstes Piezoelement (6) in der Richtung normal zur Bewegungsrichtung des Bauteils formänderbar ist und ein zweites Piezoelement (2, 4) in einer Ebene normal zur Verformungsrichtung des ersten Piezoelements (6) formänderbar ist.

2. Unterseeboot nach einem der vorangehenden Ansprüche **dadurch gekennzeichnet, dass** die Antriebsvorrichtung zur Erzeugung einer Linearbewegung und/oder zur Erzeugung einer Drehbewegung ausgebildet ist.

3. Unterseeboot nach einem der Ansprüche 1 oder 2, **dadurch gekennzeichnet, dass** die Antriebsvorrichtung aus einer Kombination von X-Z-Aktoren und Y-Z-Aktoren oder aus X-Y-Z-Aktoren aufgebaut ist.

4. Unterseeboot nach einem der vorangehenden Ansprüche, **dadurch gekennzeichnet, dass** die Antriebsvorrichtung außerhalb des Druckkörpers angeordnet ist.

5. Unterseeboot nach einem der vorangehenden Ansprüche, **dadurch gekennzeichnet, dass** die Antriebsvorrichtung Teil einer Ausfahreinrichtung (16) für Ausfahrgeräte (18) bildet.

6. Unterseeboot nach einem der Ansprüche 1 bis 5, **dadurch gekennzeichnet, dass** die Antriebsvorrichtung einen Propellermotor bildet.

7. Unterseeboot nach einem der Ansprüche 1 bis 5, **dadurch gekennzeichnet, dass** die Antriebsvorrichtung Teil einer Ruderanlage bildet.

8. Unterseeboot nach einem der Ansprüche 1 bis 5, **dadurch gekennzeichnet, dass** die Antriebsvorrichtung Teil einer Schließ- und Öffnungseinrichtung für Türen oder Klappen bildet.

9. Unterseeboot nach einem der Ansprüche 1 bis 5, **dadurch gekennzeichnet, dass** die Antriebsvorrichtung Teil einer Transportvorrichtung, insbesondere Teil einer Torpedotransport- und Startvorrichtung bildet.

10. Unterseeboot nach einem der Ansprüche 1 bis 5, **dadurch gekennzeichnet, dass** die Antriebsvorrichtung Teil einer Ausstoßvorrichtung, insbesondere einer Torpedoausstoßvorrichtung bildet.

11. Unterseeboot nach einem der vorangehenden Ansprüche, **dadurch gekennzeichnet, dass** die piezoelektrischen Aktoren elastisch gelagert sind.

12. Unterseeboot nach einem der vorangehenden Ansprüche, **dadurch gekennzeichnet, dass** die Aktoren der Antriebsvorrichtung die zu bewegenden Bauteile im spannungslosen Zustand fixieren.

13. Unterseeboot nach einem der vorangehenden Ansprüche, **dadurch gekennzeichnet, dass** die Antriebsvorrichtung ein Ultraschall-Piezomotor ist.

## Claims

1. A submarine with a pressure hull and at least one drive device for moving a component (8), said drive device comprising at least one piezoelectric actuator (12, 14), **characterised in that** the piezoelectric actuator (12, 14) is arranged on the component (8) to be moved, in a manner such that it may be brought into contact and out of contact with this and that the actuator (12, 14) comprises at least two piezoelements (2, 4, 6) which are coupled to one another in a direction normal to the movement direction of the component, wherein a first piezoelement (6) may be changed in shape in the direction normal to the movement direction of the component, and a second piezoelement (2, 4) may be changed in shape in a plane normal to the deformation direction of the first piezoelement (6).

2. A submarine according to one of the preceding claims, **characterised in that** the drive device is designed for producing a linear movement and/or for producing a rotational movement.

3. A submarine according to one of the claims 1 or 2, **characterised in that** the drive device is constructed from a combination of X-Z actuators and Y-Z actuators or from X-Y-Z actuators.

4. A submarine according to one of the preceding claims, **characterised in that** the drive device is arranged outside the pressure hull.

5. A submarine according to one of the preceding claims, **characterised in that** the drive device forms part of an extension device (16) for extension apparatus (18).

6. A submarine according to one of the claims 1 to 5, **characterised in that** the drive device forms a propeller motor.

7. A submarine according to one of the claims 1 to 5, **characterised in that** the drive device forms part of a rudder assembly.

8. A submarine according to one of the claims 1 to 5, **characterised in that** the drive device forms part of a closing and opening device for doors or hatches.

9. A submarine according to one of the claims 1 to 5, **characterised in that** the drive device forms part of a transport device, in particular part of a torpedo transport device and starting device.

10. A submarine according to one of the claims 1 to 5, **characterised in that** the drive device forms part of an ejection device, in particular of a torpedo ejection device.

11. A submarine according to one of the preceding claims, **characterised in that** the piezoelectric actuators are elastically mounted.

12. A submarine according to one of the preceding claims, **characterised in that** the actuators of the drive device fix the components to be moved, in the voltage-free condition.

13. A submarine according to one of the preceding claims, **characterised in that** the drive device is an ultrasound piezo-motor.

## Revendications

1. Sous-marin comprenant une coque pressurisée et au moins un dispositif d'entraînement servant à déplacer un élément (8), qui présente au moins un actionneur piézoélectrique (12, 14), **caractérisé en ce que** l'actionneur piézoélectrique (12, 14) est agencé au niveau de l'élément (8) à déplacer de manière à pouvoir être mis en contact et hors de contact avec cet élément, et **en ce que** l'actionneur (12, 14) présente au moins deux éléments piézoélectriques (2, 4, 6) accouplés ensemble dans une direction normale au dispositif de déplacement de l'élément, un premier élément piézoélectrique (6) pouvant se déformer dans la direction normale à la direction de déplacement de l'élément et un deuxième élément piézoélectrique (2, 4) pouvant se déformer dans un plan normal à la direction de déformation du premier élément piézoélectrique (6).

2. Sous-marin selon l'une des revendications précédentes, **caractérisé en ce que** le dispositif d'entraînement est conçu pour produire un déplacement linéaire et/ou pour produire un mouvement de rotation.

3. Sous-marin selon l'une des revendications 1 ou 2, **caractérisé en ce que** le dispositif d'entraînement est constitué par une combinaison d'actionneurs X-Z et d'actionneurs Y-Z ou d'actionneurs X-Y-Z.

4. Sous-marin selon l'une des revendications précédentes, **caractérisé en ce que** le dispositif d'entraînement est disposé à l'extérieur de la coque pressurisée.

5. Sous-marin selon l'une des revendications précédentes, **caractérisé en ce que** le dispositif d'entraînement fait partie d'un dispositif de déploiement (16) pour des appareils pouvant être déployés (18).

6. Sous-marin selon l'une des revendications 1 à 5, **caractérisé en ce que** le dispositif d'entraînement forme un moteur à hélice.

7. Sous-marin selon l'une des revendications 1 à 5, **caractérisé en ce que** le dispositif d'entraînement fait partie d'un équipement de gouvernail.

8. Sous-marin selon l'une des revendications 1 à 5, **caractérisé en ce que** le dispositif d'entraînement fait partie d'un dispositif de fermeture et d'ouverture de portes ou de trappes.

9. Sous-marin selon l'une des revendications 1 à 5, **caractérisé en ce que** le dispositif d'entraînement fait partie d'un dispositif de transport, en particulier d'un dispositif de transport et de lancement de torpilles.

10. Sous-marin selon l'une des revendications 1 à 5, **caractérisé en ce que** le dispositif d'entraînement fait partie d'un dispositif de lancement, en particulier d'un dispositif de lancement de torpilles.

11. Sous-marin selon l'une des revendications précédentes, **caractérisé en ce que** les actionneurs piézoélectriques sont montés élastiquement.

12. Sous-marin selon l'une des revendications précédentes, **caractérisé en ce qu'**à l'état hors circuit, les actionneurs du dispositif d'entraînement immobilisent les éléments à déplacer.

13. Sous-marin selon l'une des revendications précédentes, **caractérisé en ce que** le dispositif d'entraînement est un piézomoteur à ultrasons.
